# EUROPEAN PATENT SPECIFICATION

(11) **EP 0 355 916 B1**
(45) Date of publication and mention of the grant of the patent: **18.08.1993**
(21) Application number: 89202097.5
(22) Date of filing: 17.08.1989
(51) Int. Cl.: C04B 38/00, C04B 35/80, C04B 41/88

(54) **Porous composite ceramic structure**
Poröse keramische Verbundstruktur
Structure céramique poreuse composite

(30) Priority: 18.08.1988 US 233685
(43) Date of publication of application: 28.02.1990
(73) Proprietor: THE DOW CHEMICAL COMPANY, Midland, Michigan 48640 (US)
(72) Inventor: McCullough, Francis P., Jr., Lake Jackson Texas 77566 (US); Snelgrove, R. Vernon, Damon Texas 77430 (US); Brewster, Steven L., Lake Jackson Texas 77566 (US)
(74) Representative: Smulders, Theodorus A.H.J., Ir.

(56) References cited:
- EP-A- 0 121 797
- EP-A- 0 193 292
- EP-A- 0 199 567
- EP-A- 0 294 176
- WO-A-88/02695
- DE-A- 3 130 732
- DE-A- 3 433 197
- FR-A- 2 377 833

## Description

The present invention relates to lightweight, porous, thermal barrier structures comprising a composite of a ceramic material which is reinforced with a nonflammable carbonaceous fiber structure. Composite structures of the invention are particularly well adapted for use as thermal barriers such as refractory tiles or bricks, panels for furnace linings, as lightweight armor, etc. Optionally, the porous composite structure may be provided with a metallic layer or coating.

The prior art discloses various ceramic materials, particularly ceramic foams that are useful as thermal insulation or refractory materials having fire blocking properties. Ceramic tiles which have been bonded to metal structures for use in turbines and furnaces are also known. However, these ceramic tiles by themselves are heavy and, although the addition of fillers reduces the density, and thus the weight of the ceramic tiles, the mechanical properties are also affected.

It is generally desirable for a refractory material to be resistant to elevated temperatures and rapid changes in temperature, as well as corrosive environments while maintaining strength and structural integrity. It is further desirable to maximize these properties while minimizing heat capacity and thermal conductivity.

There are many types of refractories available today ranging from very dense, fused, cast refractories to highly insulating composite refractories containing fillers, such as fibers. The fiber containing refractories have a low thermal conductivity and a low heat capacity, both of which characteristics are desirable. However, there are shortcomings attendant with composite fiber refractories such as low load bearing capability and low corrosion resistance along with shrinkage at the higher temperature range of use. The dense and insulating type refractories generally have good strength at a working temperature and are capable of being formed from corrosion and erosion resistant materials. However, the shortcomings of these dense materials, be it the preformed or monolith type, is that they have a relatively high heat capacity due to their inherent mass. Due to the high heat capacity, the energy requirements to bring these dense refractory materials to a working temperature is much greater than the composite fiber refractories.

In ceramic/metal composite refractories, cracks may occur as a result of the different coefficients of expansion between the metal and the ceramic material. Prior attempts to solve such problems were to provide expansion gaps or to utilize a discontinuous ceramic layer.

It is known to apply coatings of ceramic materials and metals by vapor deposition. The general subject of vapor deposition is described in an article by R. F. Bunshah "Journal of Vacuum Science of Technology," Vol. 11, No. 4, July/August 1974. The application of ceramic materials by vapor deposition is employed chiefly in the semiconductor and optical industries where extremely thin coatings of ceramic materials are used.

In vapor deposition, an article to be coated is held over a molten pool of material of appropriate composition, such as metal, which evaporates. The vapor then condenses on and coats the article. This process is used in a variety of applications including the application of metallic coatings to gas turbine engine parts. The application to gas turbine engine parts is described in the "Journal of Vacuum Science of Technology," Vol. 11, No. 4, July/August 1974, pgs., 641 through 646 in an article by Boone et al.

U.S. Patent No. 4,568,595 Morris, discloses reticulated ceramics having a pore distribution between 2 and 50 pores/cm.

European Patent Publication Serial No. 0199567, published October 29, 1986, by McCullough et al., entitled, "Carbonaceous Fibers with Spring-Like Reversible Deflection and Method of Manufacture," discloses nonlinear carbonaceous fibers which are advantageously utilized in the composite structures of the invention.

WO Publication No. 88/02695, published April 21, 1988, entitled, "Sound and Thermal Insulation" by McCullough et al., also discloses nonlinear carbonaceous fibers and fiber structures which are advantageously utilized in the composite structures of the invention.

It is a particular object of the invention to provide a porous refractory structure having improved load bearing properties and corrosion-erosion resistance. Refractory structures of the invention are lightweight and have a low thermal conductivity, low heat capacity and improved thermal shock resistance.

According to the invention, there is provided a porous composite structure comprising a heat set porous ceramic composition and a nonflammable reinforcing carbonaceous fiber or fiber structure.

The term "carbonaceous fiber structure" as used herein is intended to include a multifilament tow or yarn composed of many filaments, a multiplicity of entangled carbonaceous fibers forming a wool-like fluff, a nonwoven batting, matting or felt, a woven web, scrim or fabric, a knitted cloth, for example a plain jersey knit, or the like. The structure when in the form of a batting may be prepared by conventional needle-punching means.

The term "composite structure" as used herein is intended to include, a porous, heat set, ceramic composition having dispersed or distributed within the ceramic composition a carbonaceous fiber structure. The term "composite structure" is also intended to include a carbonaceous fiber structure in which the fiber structure is coated with a layer of the ceramic composition to form a structure of relatively high porosity.
Figure 1 is a perspective view of one embodiment of the invention of a porous composite block comprising a ceramic material having a batting of carbonaceous fibers; and
Figure 2 is a cross-sectional view of another embodiment of the invention of a porous composite block comprising a ceramic material containing a plurality of carbonaceous fiber webs.

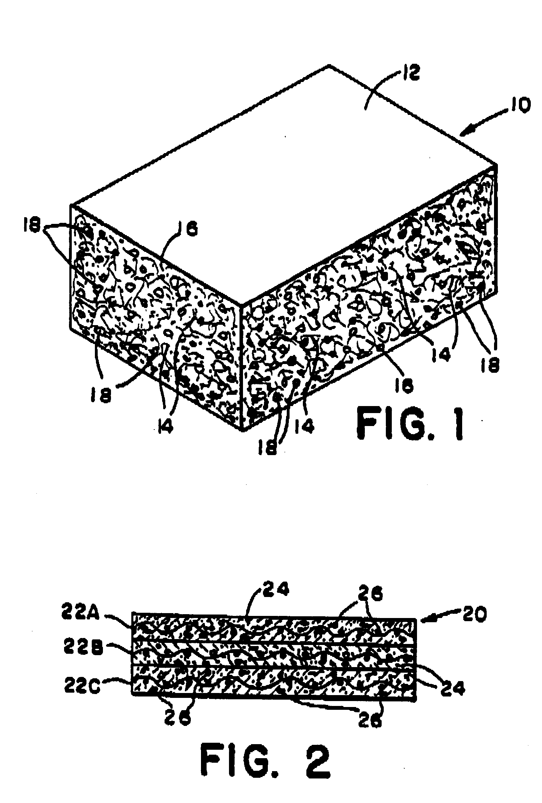

With particular reference to Figure 1, there is illustrated one embodiment of a porous composite block 10 comprising a batting of carbonaceous fibers 14 disbursed within a matrix of a ceramic material 16. The ceramic material contains a multiplicity of pores 18 which are formed by conventional means during the manufacture of the composite block. The fibers 14 are nonlinear so as to increase the porosity of the composite block.

If desired, the composite block 10 may be coated with a film of a metallic material 12 such as by vapor deposition or by sintering.

In Figure 2, there is illustrated another embodiment of the invention comprising a porous composite block 20 which is formed of a ceramic material 24 containing a multiplicity of pores 26 having incorporated therein a plurality of woven or nonwoven webs 22A, 22B, 22C of carbonaceous fibers. It will be understood that the carbonaceous fibers can also be in the form of a woven cloth or knitted fabric.

The composite block advantageously contains from 2 to 50 pores/cm. The pore diameters will vary depending upon the particle size and the materials utilized to form the porous ceramic matrix.

The ceramic materials which can be utilized in the present invention comprise oxides or mixtures of oxides, selected from one or more of the following elements: magnesium, calcium, strontium, barium, aluminum, scandium, yttrium, the lanthanides, the actinides, gallium, indium, thallium, silicon, titanium, zirconium, hafnium, thorium, germanium, tin, lead, vanadium, niobium, tantalum, chromium, molybdenum, tungsten, and uranium. Compounds such as the carbides, borides and silicates of the transition metals may also be used. Other suitable ceramic materials which may be used are zircon-mullite, mullite, alpha alumina, sillimanite, magnesium silicates, zircon, petalite, spodumene, cordierite and alumino-silicates. Suitable proprietary products are MATTECEL^{™} supplied by Matthey Bishop, Inc., TORVEX^{™} sold by E.I. du Pont de Nemours & Co., Wl^{™} sold by Corning Glass, and THERMACOMB^{™} sold by the American Lava Corporation. Another useful product is described in British Patent No. 882, 484.

Other suitable active refractory metal oxides include for example, active or calcined beryllia, baria, alumina, titania, hafnia, thoria, zirconia, magnesia or silica, or a combination of metal oxides such as boria-alumina or silica-alumina. Preferably the refractory oxide is composed predominantly of oxides of one or more metals of Groups II, III and IV of the Periodic Table.

Among the more preferred compounds may be mentioned YC, TiB₂, HfB₂, VB₂, VC, Vn, NbB₂, NbN, TaB₂, CrB₂, MoB₂, and W₂B.

Advantageously, the ceramic materials utilized in the present invention are selected from oxides such as TiO₂; nitrides such as BN; carbides such as BC and TiC; borides such as TiB₂ and TiB; metals for example Ni, Au, and Ti; and the like.

The carbonaceous fibers (or fiber structure) that are utilized in the composite structure of the present invention have a carbon content of at least 65 percent and an LOI value of greater than 40 when the fibers are tested according to test method ASTM D 2863-77. The test method is also known as "Oxygen Index" or "Oxygen Index Value". With this procedure, the concentration of oxygen in an O₂/N₂ mixture is determined at which a vertically mounted specimen is ignited at its upper end and just (barely) continues to burn.

The carbonaceous fibers are nonflammable, nonlinear, resilient, shape reforming and elongatable and have a reversible deflection ratio of greater than 1.2:1 and an aspect ratio (l/d) of greater than 10:1. The carbonaceous fibers preferably have a sinusoidal or coil-like configuration or a more complicated structural configuration comprising a combination of the two. More preferably, the carbonaceous fibers are sinusoidal in configuration. It will be understood that the composite structure of the invention may also contain linear carbonaceous fibers having the same carbon content, i.e., of at least 65 percent, and LOI value of greater than 40. The fibers are advantageously utilized in an amount of from 1 to 20 percent by weight based on the total weight of the composite structure, preferably from 2 to 5 percent by weight.

The carbonaceous fibers are prepared from a suitable polymeric precursor fiber or fiber structure, which is stabilized, as for example by oxidation at a temperature which is typically less than 250°C for acrylic fibers. The stabilized fiber or fiber structure is then heat treated, in a relaxed and unstressed condition and in an inert atmosphere for a period of time sufficient to produce a heat induced thermoset reaction wherein additional cross-linking and/or a cross-chain cyclization reactions occur between the original polymer chains.

The carbonaceous fibers (or fiber structure) that are utilized in the composite structure of the invention may be classified into three groups depending upon the particular use of the fibers and the environment in which the composite structures are placed. In a first group, the carbonaceous fibers have a carbon content of greater than 65 percent but less than 85 percent, are electrically nonconductive and do not possess any electrostatic dissipating characteristics, i.e., they are not able to dissipate an electrostatic charge.

The term electrically nonconductive as utilized in the present invention relates to a resistance of greater than 4 x 10⁶ ohms/cm when measured on a 6K (6000 filaments) tow of fibers in which the individual fibers each have a diameter of from 7 to 20 microns. The specific resistivity of the carbonaceous fibers is greater than about 10⁻¹ ohm-cm. The specific resistivity of the fibers is calculated from measurements as described in the aforementioned WO Publication No. 88/02695.

When the fiber is a stabilized and heat set acrylic fiber it has been found that a nitrogen content of 19 percent or higher results in an electrically nonconductive fiber.

In a second group, the carbonaceous fibers are classified as being partially electrically conductive (i.e., having a low electrical conductivity) and having a carbon content of greater than 65 percent but less than 85 percent. Low conductivity means that a 6K tow of fibers has a resistance of from 4 x 10⁶ to 4 x 10³ ohms/cm. Preferably, the carbonaceous fibers are derived from stabilized acrylic fibers and possesses a percentage nitrogen content of from 5 to 35, preferably from 16 to 22, more preferably from 16 to 19 percent, for the case of an acrylic copolymer fiber.

In a third group, the fibers have a carbon content of at least 85 percent. These fibers are characterized as having a high electrical conductivity. That is, the fibers are substantially graphitic and have an electrical resistance of less than 4 x 10³ ohms/cm. Correspondingly, the electrical resistivity of the fibers is less than 10⁻¹ ohm-cm. These fibers are useful in applications where electrical grounding or shielding is desired.

The carbonaceous fibers of the third group may have imparted to them an electrically conductive property on the order of that of metallic conductors by heating the fibers (or fiber structure) to a temperature above 1000°C in a nonoxidizing atmosphere. The electroconductive property may be obtained from selected starting materials such as pitch (petroleum or coal tar), polyacetylene, acrylic materials, e.g., a polyacrylonitrile copolymer such as PANOX^{™} or GRAFIL^{™}-01, polyphenylene, polyvinylidene chloride (SARAN^{™}, a trademark of The Dow Chemical Company), and the like.

The composite structure of the present invention may be prepared utilizing any conventional method. For example, the ceramic composition may be mixed under high speed stirring to produce a foam, and added as a foam to a fibrous structure, e.g., a wool-like fluff, batting, web or cloth, which is moved on a conveyor. A vacuum producing mechanism is provided to draw the ceramic foam into the fibrous structure and the ceramic composition is then cured by heat. The carbonaceous fibers are preferably nonlinear which helps to promote the porosity of the composite structure.

Another method of forming the composite structure is to place the fibrous structure and a ceramic composition, preferably as a foam, in a mold and then cure the ceramic composition, preferably with heat or steam.

The ceramic material mixture utilized may comprise from 20 to 70 percent of a ceramic material, from 1 to 10 percent silica, from 1 to 10 percent inorganic binder, from 0 to 1 percent of a surfactant and the remainder water in an amount of up to 100 percent by weight. The ceramic material mixture is mixed under high shear until creamy. Viscosity adjustments may be made. The surfactant aids in forming a dispersion of the ceramic material within the mixture. A viscosity range of from 250 to 1500 centipoise produces a suitable foamed ceramic mixture which is then added to the carbonaceous fiber structure and cured to produce a porous composite structure.

The present invention is further illustrated by the following examples, but is not to be limited thereby. The amounts shown throughout the specification are all in percent by weight of composition.

### Example 1

A. A piece of knitted cloth (plain jersey knit) was made from tows (6K) of PANOX^{™} OPF (oxidized PAN fibers) and was heat treated to a temperature of 900°C to form a carbonaceous fiber structure. A single tow of the carbonaceous fiber was deknitted from the fabric and a batting was formed.
B. A 2000 gram batch of a ceramic composition was prepared as follows:

| | |
|---|---|
| Alumina (aluminum oxide) | 1960 g |
| Silica (SiO₂) | 100 g |
| Binder | 200 g |
| Surfactant | 5 ml |
| Water | 1000 ml |

The materials were mixed under high shear until creamy and the viscosity was adjusted to about 500 centipoise.

The batting from Part A was placed in a shallow open pan having a dimension of 10 cm x 20 cm and a depth of 5 cm. The ceramic composition of Part B was poured into the pan to completely cover the batting. The pan was then placed into a fired kiln for 20 minutes and then cooled to produce a ceramic block. Results:

| | |
|---|---|
| Maximum use temperature: | 1800°C |
| Thermal shock resistance: | Excellent |
| Compressive strength: | 1102 kPa |

A block of a porous composite was prepared in the same manner as described hereinabove but without the carbonaceous fibers. The ceramic material was tested as follows:

| | |
|---|---|
| Maximum use temperature: | 1700°C |
| Thermal shock resistance: | Good |
| Compressive strength: | 1137 kPa |

The carbonaceous fibers improved the use temperature and shock resistance without any substantial change in compressive strength.

If desired, the block may be metal coated by vapor deposition or its surface sintered with an open flame.

### Example 2

A piece of knitted fabric of carbonaceous fiber tows (made from a precursor fiber which had been treated at a temperature of 700°C) was deknitted, i.e., the individual tows were removed from the fabric. The tows were then opened with a Shirley opener to produce a wool-like fluff. The fluff was mixed with a polyester binder in a Rando Webber to produce a batting containing 25 percent polyester binder and 75 percent carbonaceous fibers. The batting was then heated to melt the polyester binder to impart greater integrity to the batting (known as bonding). The bonded batting was then needle punched to produce a greater entanglement of the fibers, thus providing still greater integrity and strength to the batting.

The bonded, needle-punched batting was cut into three specimens having a dimension of approximately 10 cm x 10 cm and a thickness of 5 cm. These specimens were heated, under a nitrogen atmosphere, to a temperature of 1000°C. Each specimen was placed into a separate pan containing the following composition:

| A | B | C |
|---|---|---|
| Mullite (3Al₂O₃·2Sio₂) 1960g | Lithium Aluminum silicate 1960 g | Zirconia (ZiO₂) 1960 g |
| Silica 100 g | Silica 100 g | Silica 100 g |
| Binder 200 g | Binder 200 g | Binder 200 g |
| Surfactant 5 ml | Surfactant 5 ml | Surfactant 5 ml |
| Water 1000 ml | Water 1000 ml | Water 1000 ml |

Comparison samples of a ceramic material were prepared without any fibers.

All off the pans were placed in a pottery kiln and baked for 1 hour and then cooled.

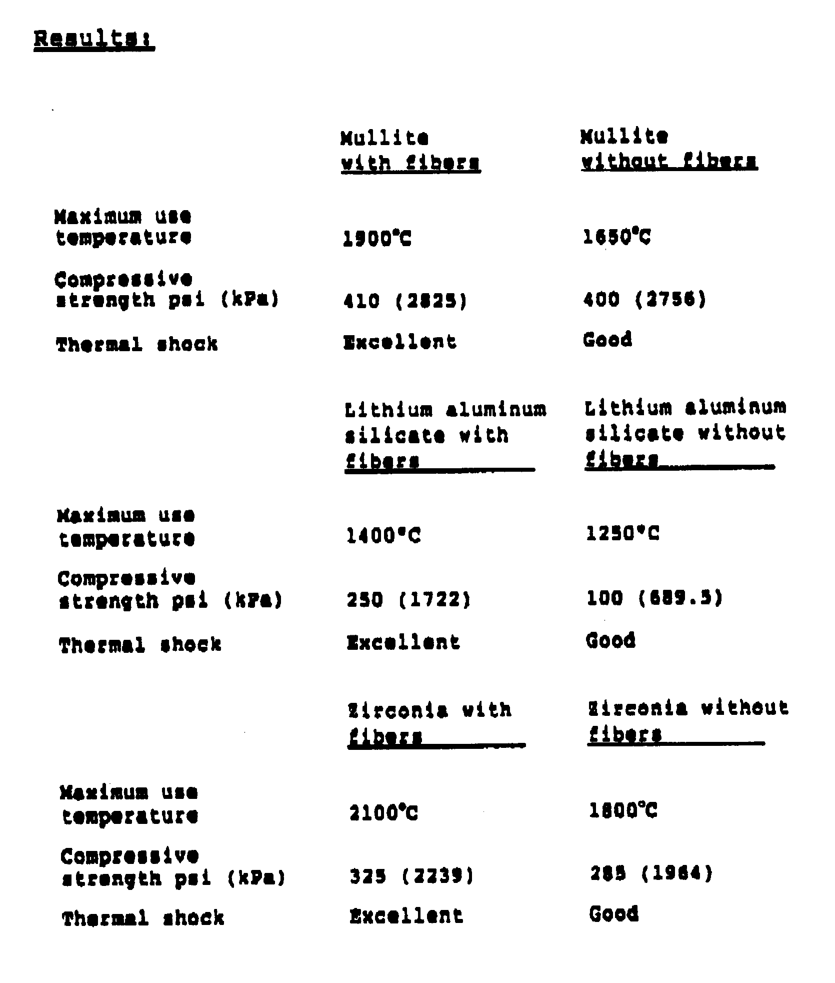

## Claims

1. A porous composite structure comprising a heat set porous ceramic composition and a non-flammable reinforcing carbonaceous fiber or fiber structure, wherein said carbonaceous fiber or fiber structure is non-linear and has a reversible deflection ratio of greater than 1.2:1.

2. The composite structure of claim 1, wherein said carbonaceous fibers or fiber structure is present in an amount of from 1 to 20 percent by weight based on the total weight of the composite structure.

3. The composite structure of claim 1 or 2, wherein said composite structure contains from 2 to 50 pores/cm.

4. The composite structure of claim 1, 2 or 3, wherein said ceramic composition is a metal oxide.

5. The composite structure of claim 1, 2 or 3, wherein said ceramic composition comprises a titanium compound selected from titanium nitride, titanium carbide, titanium boride, titanium silicide, or mixtures thereof.

6. The composite structure of any one of the preceding claims, wherein said carbonaceous fibers have a carbon content of greater than 65 percent, a LOI value of greater than 40, and an aspect ratio of greater than 10:1.

7. The composite structure of claim 6, wherein said carbonaceous fibers are electrically non-conductive and do not possess any electrostatic dissipating characteristics, said fibers having a carbon content of greater than 65 percent but less than 85 percent and an electrical resistance of greater than 4 x 10⁶ ohms/cm.

8. The composite structure of claim 6, wherein said carbonaceous fibers are partially electrically conductive and have electrostatic dissipating characteristics, said fibers having an electrical resistance of from 4 x 10⁶ to 4 x 10³ ohms/cm.

9. The composite structure of claim 6, wherein said carbonaceous fibers have a carbon content of at least 85 percent and are electrically conductive, said fibers having an electrical resistance of less than 4 x 10³ ohms/cm.

10. The composite structure of claim 6, wherein said carbonaceous fibers are derived from an acrylic precursor polymer, and said fibers have a nitrogen content of from 5 to 35 percent by weight.

11. The composite structure of claim 10, wherein said carboneceous fibers have a percent nitrogen content of from 16 to 19 percent.

12. The composite structure of any one of the preceding claims, wherein said composite structure contains a metal layer.

## Patentansprüche

1. Poröse Verbundstruktur, die eine heiß-fixierte poröse keramische Zusammensetzung und eine nicht-entflammbare verstärkende kohlenstoffhaltige Faser oder Faserstruktur umfaßt, worin die kohlenstoffhaltige Faser oder Faserstruktur nicht-linear ist und ein reversibles Auslenkungsverhältnis von mehr als 1,2:1 aufweist.

2. Verbundstruktur nach Anspruch 1, worin die kohlenstoffhaltige Faser oder Faserstruktur in einer Menge von 1 bis 20 Gew.-% auf Basis des Gesamtgewichts der Verbundstruktur vorhanden ist.

3. Verbundstruktur nach Anspruch 1 oder 2, worin die Verbundstruktur 2 bis 50 Poren pro Zentimeter enthält.

4. Verbundstruktur nach Anspruch 1, 2 oder 3, worin die keramische Zusammensetzung ein Metalloxid ist.

5. Verbundstruktur nach Anspruch 1, 2 oder 3, worin die keramische Zusammensetzung eine Titanverbindung umfaßt, die aus Titannitrid, Titancarbid, Titanborid, Titansilicid oder Gemischen davon ausgewählt ist.

6. Verbundstruktur nach einem der vorhergehenden Ansprüche, worin die kohlenstoffhaltigen Fasern einen Kohlenstoffgehalt von mehr als 65 %, einen LOI-Wert von mehr als 40 und ein Aspektverhältnis von mehr als 10:1 aufweisen.

7. Verbundstruktur nach Anspruch 6, worin die kohlenstoffhaltigen Fasern elektrisch nicht leitfähig sind und keine elektrostatischen Ableitungseigenschaften besitzen, wobei die Fasern einen Kohlenstoffgehalt von mehr als 65 %, aber weniger als 85 % und einen elektrischen Widerstand von mehr als 4 x 10⁶ Ohm/cm aufweisen.

8. Verbundstruktur nach Anspruch 6, worin die kohlenstoffhaltigen Fasern teilweise elektrisch leitfähig sind und elektrostatische Ableitungseigenschaften besitzen, wobei die Fasern einen elektrischen Widerstand von 4 x 10⁶ bis 4 x 10³ Ohm/cm aufweisen.

9. Verbundstruktur nach Anspruch 6, worin die kohlenstoffhaltigen Fasern einen Kohlenstoffgehalt von mindestens 85 % besitzen und elektrisch leitfähig sind, wobei die Fasern einen elektrischen Widerstand von weniger als 4 x 10³ Ohm/cm aufweisen.

10. Verbundstruktur nach Anspruch 6, worin die kohlenstoffhaltigen Fasern von einem Acryl-Vorläuferpolymer stammen und die Fasern einen Stickstoffgehalt von 5 bis 35 Gew.-% besitzen.

11. Verbundstruktur nach Anspruch 10, worin die kohlenstoffhaltigen Fasern einen prozentualen Stickstoffgehalt von 16 bis 19 % besitzen.

12. Verbundstruktur nach einem der vorhergehenden Ansprüche, worin die Verbundstruktur eine Metallschicht enthält.

## Revendications

1. Une structure composite poreuse comprenant une composition céramique poreuse thermofixée et des fibres carbonées ou une structure en fibre carbonée ininflammables pour le renforcement, caractérisée en ce que lesdites fibres carbonées ou la structure en fibre carbonée sont non linéaires et présentent un taux de déformation réversible supérieur à 1,2:1.

2. Stucture composite selon la revendication 1, caractérisée en ce que lesdites fibres carbonées ou la structure en fibre carbonée sont présentes en une quantité de 1 à 20% en poids par rapport au poids total de la structure composite.

3. Structure composite selon la revendication 1 ou 2, caractérisée en ce que ladite structure composite contient 2 à 50 pores/cm.

4. Structure composite selon l'une quelconque des revendications 1 à 3, caractérisée en ce que ladite composition céramique est un oxyde métallique.

5. Structure composite selon l'une quelconque des revendications 1 à 3, caractérisée en ce que ladite composition céramique comprend un composé du titane choisi parmi le nitrure de titane, le carbure de titane, le borure de titane, le siliciure de titane ou leurs mélanges.

6. Structure composite selon l'une quelconque des revendications précédentes, caractérisée en ce que lesdites fibres carbonées ont un pourcentage de carbone supérieur à 65%, un indice d'oxygène supérieur à 40, et un rapport de forme supérieur à 10:1.

7. Structure composite selon la revendication 6, caractérisée en ce que lesdites fibres carbonées sont non-électroconducteurs et ne possèdent aucune propriété de dissipation électrostatique, lesdites fibres ayant un pourcentage de carbone supérieur à 65% mais inférieur à 85% et une résistance électrique de plus de 4 x 10⁶ ohms/cm.

8. Structure composite selon la revendication 6, caractérisée en ce que les fibres carbonées sont partiellement électroconducteurs et possèdent des propriétés de dissipation électrostatique, lesdites fibres ayant une résistance électrique de 4 x 10⁶ à 4 x 10³ ohms/cm.

9. Structure composite selon la revendication 6, caractérisée en ce que lesdites fibres carbonées ont un pourcentage de carbone d'au moins 85% et sont électroconducteurs, lesdites fibres ayant une résistance électrique de moins de 4 x 10³ ohms/cm.

10. Structure composite selon la revendication 6, caractérisée en ce que les fibres carbonées dérivent d'un polymère précurseur d'acrylique, et que lesdites fibres ont un pourcentage d'azote de 5 à 35% en poids.

11. Structure composite selon la revendication 10, caractérisée en ce que lesdites fibres carbonées ont un pourcentage d'azote de 16 à 19%.

12. Structure composite selon l'une quelconque des revendications précédentes, caractérisée en ce que ladite structure composite contient une couche métallique.
